# DEMANDE DE BREVET EUROPEEN

(11) **EP 4 763 925 A1**
(43) Date de publication de la demande: **24.06.2026**
(21) Numéro de dépôt: 25217378.6
(22) Date de dépôt: 20.11.2025
(51) Int. Cl.: C09C 1/30, C01B 33/18, C09C 3/00, C09C 3/08, C09C 3/12

(54) **AGENT RETICULANT PARTICULAIRE FONCTIONNALISE**

(30) Priorité: 20.12.2024 FR 2415015
(71) Demandeur: Stellantis Auto SAS, 78300 Poissy (FR); CNRS - Centre National de la Recherche, 75016 Paris (FR); Materi'Act, 92000 Nanterre (FR); SORBONNE UNIVERSITE, 75006 Paris (FR)
(72) Inventeur: LAFONT DE SENTENAC, MARIETTE, 75019 PARIS (FR); NICOLE, LIONEL, 91800 BRUNOY (FR); TONNELIER, PIERRE, 75015 PARIS (FR); DELALANDE, STEPHANE, 91310 LONGPONT SUR ORGE (FR); ROZES, LAURENCE, 91800 BRUNOY (FR); DELORY, MATHILDE, 69007 LYON (FR); DEBUISSY, THIBAUD, 60000 BEAUVAIS (FR); DUFRANCATEL, LAURENCE, 78810 FEUCHEROLLES (FR)
(74) Mandataire: BCIP

(57) **Abrégé**

La présente invention concerne des particules hybrides (1), formées de particules inorganiques fonctionnalisées par au moins une molécule (2) portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule (2) étant un organosilane, et au moins un contre-ion et/ou au moins un donneur/accepteur de liaisons hydrogène (3) portant au moins une double liaison C=C, la quantité de paires d'ions et/ou de groupements électronégatifs susceptibles d'être engagés dans la liaison hydrogène en surface des particules inorganiques étant comprise entre 0,5 et 20% mol par rapport à la quantité de précurseurs des particules inorganiques.

## Description

### Domaine technique

L'invention se situe dans le domaine de la synthèse et de la fonctionnalisation de particules en tant qu'agent réticulant pour la formation de réseau de réticulation réversible/dynamique dans des polymères.

### Technique antérieure

Plusieurs agents réticulants moléculaires sont utilisés pour réticuler, après la phase de synthèse, des polymères thermoplastiques et élastomères. Dans le cas des polyéthylènes, ils sont réticulés de manière industrielle par des peroxydes ou des silanes. Ils forment ainsi la famille des PER-a pour la réticulation à l'aide de peroxydes et PER-b pour la réticulation à l'aide des silanes. La réticulation ne doit pas s'effectuer lors de l'étape de mise en forme, comme l'extrusion par exemple, et ce, sous peine de détériorer les équipements. Il faut donc choisir soigneusement le type de peroxyde et les paramètres de mise en forme comme c'est le cas dans les PER-a et PER-b. De plus, comme ce type de réticulation n'est pas réversible, les polymères perdent leur capacité à être remis en forme et ne sont donc plus recyclables. Pour les PER par exemple, ils ne sont seulement réutilisables qu'après broyage pour obtenir des charges pour d'autres matières plastiques, ce qui limite leur employabilité.

Un autre type de polymères, appelé vitrimère, a vu le jour dans les années 2010, impliquant une réticulation des chaînes macromoléculaires par des liaisons covalentes organiques réversibles. Ces liaisons sont dynamiques, car elles sont engagées dans des réactions chimiques d'échange ou de rupture/reformation, déclenchées par un stimulus externe comme une élévation de la température ou une irradiation lumineuse ou radicalaire. La dynamique de ces liaisons permet au vitrimère d'être théoriquement recyclables, tout en ayant des propriétés mécaniques proches des thermodurcissables.

Il existe deux stratégies principales pour préparer ce genre de polymère. La première est basée sur la copolymérisation de monomères complémentaires multifonctionnels portant les fonctions impliquées dans les réactions d'échange. La seconde consiste en la post-fonctionnalisation de matrices polymères existantes en une ou plusieurs étapes. Les molécules, ainsi engagées dans ces réactions réversibles, peuvent être considérées comme agents réticulants. Les agents réticulants sélectionnés peuvent rejeter des molécules volatiles lors de l'étape de réticulation, entraînant des défauts dans le matériau final. Dans le cas où les liaisons dynamiques sont engagées dans des réactions de transestérification, un catalyseur est nécessaire pour activer les échanges, ce qui peut entraîner un vieillissement prématuré de la matrice polymère et diminuer leur performance après remise en forme. Pour les liaisons dynamiques entre fonctions dioxaborolanes, les agents réticulants sont des esters boroniques. Leur production n'est pas encore optimisée, impliquant des coûts de production élevés. De plus, **il** y a souvent une grande différence de polarité entre des polymères apolaires et les points de réticulation réversible, ce qui engendre une ségrégation de phase qui n'est pas encore contrôlée et dont l'impact n'est pas encore compris.

Les agents réticulants permettant ces réactions d'échange peuvent être incompatibles avec certaines familles de polymères de par la faible réactivité et le caractère apolaire de ces derniers, comme c'est le cas pour les polyoléfines. Ceux ayant montré des résultats concluants sont impliqués dans des réactions d'échange de liaisons siloxanes, d'échange entre amine et uréthane vinylogue, entre ester boroniques, entre groupes fonctionnels soufrés ou dans des réactions de transestérification. Des brevets ont été déposés sur ces 3 derniers types de liaisons dynamiques.

Les ionomères sont une autre famille de polymères basés, pour leur part, sur une réticulation de type ionique. Il s'agit de copolymères thermoplastiques dont l'un des motifs de répétition porte des groupements ioniques ou ionisables, la réticulation étant alors assurée par l'introduction de cations métalliques divalents. On peut à titre d'exemple citer les résines commercialisées sous l'appellation Surlyn^{®}. Il s'agit de copolymères entre l'éthylène et l'acide méthacrylique. Les motifs de répétitions ioniques sont les groupements carboxylates neutralisés partiellement par des sels métalliques, généralement le zinc Zn²⁺. Les sels métalliques engagés dans ce type de réticulation peuvent alors être considérés comme agents réticulants. L'avantage de la réticulation ionique réside dans le caractère réversible des liaisons ioniques à chaud. L'étape d'insertion des agents réticulants que sont les sels métalliques nécessite des dispositifs complexes où le taux d'humidité doit être contrôlé. De plus, il a été démontré que les groupements ioniques se regroupent dans la matrice et forment des nanodomaines. La morphologie de ces nanodomaines et par extension celle des ionomères est complexe, n'est pas encore bien comprise et reste incontrôlée.

Différents types de particules inorganiques ont été utilisées dans des nanocomposites, tels que des métaux (AI, Fe, Au et Ag), des oxydes métalliques (ZnO, Al₂O₃, CaCO₃ et TiO₂) et des métalloïdes (SiO₂). Il est fréquent de fonctionnaliser ces particules avec des groupements organiques afin de les stabiliser et d'en améliorer leur dispersion dans la matrice polymère. En effet, les propriétés conférées au polymère sont accrues quand la compatibilité des charges avec la matrice polymère et leur état de dispersion est augmentée. Pour les oxydes, la fonctionnalisation est généralement effectuée à l'aide d'organosilane en solution. L'avantage de cette technique est la large variété de groupes fonctionnels pouvant être greffés sur les particules. De cette manière, des particules se sont vues conférées des propriétés d'agents réticulants mais de façon non réversible.

A la place de sels métalliques, un ionomère ayant pour agents réticulants de particules chargées négativement a été décrit dans le brevet US 11,370,896 B2. Le nanocomposite décrit est constitué de nanoparticules de silice fonctionnalisées avec un groupement anionique de type sulfonate et qui vient se lier/réticuler de manière dynamique à un copolymère PU/PLA portant des groupements cationiques pendants imidazolium. Ce matériau est utilisé sous forme de film et a montré des capacités de réparation et de mémoire de forme thermo-stimulée ainsi qu'une augmentation de son élongation à la rupture et de son module d'Young. Les nanoparticules utilisées sont commerciales et elles sont fonctionnalisées dans un second temps par un organosilane portant une fonction sulfonate. Cette fonctionnalisation s'effectue dans une solution aqueuse acidifiée et nécessite un temps de mélange de 24h puis une dialyse de la solution pendant 3 jours.

Pour tout agent de réticulation sous forme de particules, leur fonctionnalisation par des organosilanes s'effectue majoritairement en milieu aqueux, avec un procédé discontinu, ce qui limite la productivité et engendre une quantité de déchets solvatés non négligeable. Cependant, toutes ces particules engendrent une réticulation covalente des matrices polymères, ce qui entraîne les mêmes problèmes mentionnés précédemment, c'est-à-dire une perte de propriétés de remise en forme et de recyclabilité des matrices polymères hybridées.

Le document de brevet publié WO 2017/207913 A1 divulgue des agents réticulants dynamiques permettant d'apporter des propriétés nouvelles à des matrices polymères. Cependant, ces agents réticulants sont moléculaires et non particulaires.

### Exposé de l'invention

La présente invention a pour objectif de pallier au moins un des inconvénients de l'état de la technique susmentionné.

Plus particulièrement, l'invention a pour objectif de proposer des particules hybrides, formées de particules inorganiques fonctionnalisées par au moins une molécule portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule étant un organosilane, et au moins un contre-ion et/ou au moins un donneur/accepteur de liaisons hydrogène portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des particules inorganiques.

Par « particule hybride », on entend une particule constituée d'un cœur inorganique et d'une surface comportant des molécules organiques.

Les particules selon l'invention présentent les avantages suivants.

Les particules hybrides de l'invention en tant qu'agents de réticulation réversible ou agents réticulants sont compatibles avec les thermoplastiques et/ou élastomères réticulables ou fonctionnalisables via l'emploi de peroxyde. En effet, contrairement aux ionomères ou aux vitrimères qui impliquent une copolymérisation avec un monomère portant une fonction spécifique pour une réticulation réversible, les particules hybrides présentent l'avantage de pouvoir être utilisées indépendamment du polymère à réticuler. Elles permettent de réticuler les polymères thermoplastiques et/ou élastomères de façon universelle et de façon réversible, ce qui favorise leur recyclabilité et donc accroît l'indice de réparabilité des pièces concernées, améliore leurs propriétés mécaniques, leur tenue thermique, leur température d'usage et donc leur stabilité thermique.

L'incorporation de ces agents réticulants dans un polymère thermoplastique et/ou un élastomère permet d'obtenir un matériau hybride ayant une stabilité dimensionnelle accrue à haute température et ainsi des propriétés mécaniques plus élevées à haute température. A basse température, les propriétés mécaniques, telles que le module d'Young du polymère thermoplastique ou de l'élastomère ne sont que faiblement impactées, c'est-à-dire par exemple que cet impact est inférieur ou égal à 20%, ce qui est un avantage par rapport à l'insertion d'autres types d'agent réticulant qui dégradent de manière plus significative les propriétés mécaniques.

Par « basse température », on entend ici une température au-dessus de la température ambiante et pouvant aller jusqu'à la fusion des thermoplastiques semi-cristallins ou jusqu'à la température de transition vitreuse des thermoplastiques amorphes.

En outre, les agents réticulants décrits dans la présente invention sont des particules ayant une taille suffisante pour éviter tous les problèmes HSE (Hygiène Sécurité Environnement) liés à la manipulation de nanoparticules. Elles sont synthétisées et fonctionnalisées en une étape, sans produire de déchets contrairement aux autres agents réticulants particulaires fonctionnalisées à l'aide d'organosilane ou encore les esters boroniques utilisés dans certains vitrimères.

Les paires d'ions contiennent par définition une quantité stœchiométrique d'anions et de cations. Lesdits anions sont de préférence des sulfonates, des carboxylates, tels que les maléates, les fumarates, les itaconates et les acides gras, des acétates, des bromates, et des chlorates. Lesdits cations sont de préférence des ammoniums, des pyridiniums, des imidazoliums, des hydroniums, et des guanadiniums.

La molécule, portant au moins une fonction ionique impliquée dans au moins une paire d'ions et/ou au moins une fonction électrostatique impliquée dans au moins un groupement électronégatif susceptible d'être engagé dans au moins une liaison hydrogène, est un organosilane. A titre d'exemple, l'organosilane est très préférentiellement une molécule de formule Si(OR)₃X, avec R étant de préférence choisi parmi les groupes méthoxy, éthoxy, propoxy, butoxy, et X étant un groupe portant un anion, de préférence de type sulfonate, carboxylate, tels que les maléates, les fumarates, les itaconates et les acides gras, acétates, bromates, et chlorates, ou un cation, de préférence de type ammonium, pyridinium, imidazolium, hydronium, et guanadiniums.

En alternative, l'organosilane est une molécule de formule Si(OR)₂X₂, avec R étant de préférence choisi parmi les groupes méthoxy, éthoxy, propoxy, butoxy, et X étant un groupe portant un anion, de préférence de type sulfonate, carboxylate, tels que les maléates, les fumarates, les itaconates et les acides gras, acétates, bromates, et chlorates, ou un cation, de préférence de type ammonium, pyridinium, imidazolium, hydronium, et guanadiniums.

Selon une autre alternative, l'organosilane est une molécule de formule Si(OR)X₃, avec R étant de préférence choisi parmi les groupes méthoxy, éthoxy, propoxy, butoxy, et X étant un groupe portant un anion, de préférence de type sulfonate, carboxylate, tels que les maléates, les fumarates, les itaconates et les acides gras, acétates, bromates, et chlorates, ou un cation, de préférence de type ammonium, pyridinium, imidazolium, hydronium, et guanadiniums.

Selon un mode de réalisation, ladite molécule ne porte qu'une unique fonction ionique impliquée dans au moins une paire d'ions.

Selon un autre mode de réalisation, ladite molécule ne porte qu'une unique fonction électrostatique impliquée dans au moins un groupement électronégatif susceptible d'être engagé dans au moins une liaison hydrogène.

Selon un autre mode de réalisation, ladite molécule porte une fonction ionique et une fonction électrostatique impliquée dans au moins un groupement électronégatif susceptible d'être engagé dans au moins une liaison hydrogène.

Selon un autre mode de réalisation, ladite molécule porte au moins deux fonctions ioniques.

Selon un autre mode de réalisation, ladite molécule porte au moins deux fonctions électrostatiques impliquées dans au moins deux groupements électronégatifs susceptibles d'être engagés dans au moins deux liaisons hydrogènes.

Selon un autre mode de réalisation, ladite molécule porte au moins deux fonctions ioniques et une fonction électrostatique impliquée dans au moins un groupement électronégatif susceptible d'être engagé dans au moins une liaison hydrogène. Selon un autre mode de réalisation, ladite molécule porte une fonction ionique et au moins deux fonctions électrostatiques impliquées dans au moins deux groupements électronégatifs susceptibles d'être engagés dans au moins deux liaisons hydrogènes.

Selon un autre mode de réalisation, ladite molécule porte au moins deux fonctions ioniques et au moins deux fonctions électrostatiques impliquées dans au moins deux groupements électronégatifs susceptibles d'être engagés dans au moins deux liaisons hydrogènes.

A titre d'exemples d'organosilane, les plus préférés sont le chlorure d'ammonium de diméthyloctadécyl(3-triméthoxysilyl)-propyle, le chlorure d'ammonium de triméthyl(3-triméthoxylsilyl)-propyle, le chlorure d'ammonium de n,n-didécyl-n-méthyl-n-(3-triméthoxysilyl)-propyle, le chlorure 4-(triméthoxysilyléthyl)benzyltriméthyel, le 3-aminopropyltriéthoxysilane, le 4-aminobutyltriéthoxysilane, le 2-(2-pyridyléthyl)triméthoxysilane, le 2-(4-pyridyléthyl)triéthoxysilane, l'acide 3-(trihydroxysilyl)-1-propanesulfonique, le 3-(guanidinyl)propyltriméthoxysilane, le sel de disodium de carboxyéthylsilanetriol, l'acide 3- (trihydroxysilyl)-1-propanesulfonique et le sel de 3-(trihydroxysilyl)propyl méthylphosphonate sodium.

Le contre-ion et/ou donneur/accepteur de liaisons hydrogène porte au moins une double liaison C=C engagée avantageusement dans la réaction de réticulation de polymères par greffage radicalaire réalisé à l'aide d'un composé de type peroxyde. De cette manière, le polymère et les particules sont connectées par une ou plusieurs liaisons ioniques et/ou électrostatiques. La double liaison C=C peut provenir d'un alcène, tel que les groupes (méth)acrylates, styréniques et vinyliques.

Le contre-ion et/ou donneur/accepteur de liaisons hydrogène peut être choisi dans le groupe constitué par un composé portant un groupe sulfonate, tel que le 3-sulfopropylméthacrylate de potassium ou le 4-vinylbenzènesulfonate de sodium, un composé portant un groupe ammonium, tel que la catécholammonium corynéine, le chlorure de (3-carboxypropyl)triméthylammonium, ou le N,N,N-triméthyl-3-[(2-méthyl-1-oxo-2-propén-1-yl)oxy]-1-propanaminium, un composé portant un groupe carboxylate, tel que l'acide maléique, l'acide méthacrylique ou l'acide acrylique, un composé portant un groupe amine, tel que le 2-(diméthylamino)méthacrylate d'éthyle, le 3-butèn-1-amine, le N-vinylformamide ou le 4-vinylaniline, et un groupe portant un groupe pyridine, tel que la 2-vinylpyridine.

Il convient de préciser par souci de clarté dans le contexte spécifique de l'invention, qu'une liaison hydrogène est une interaction électrostatique entre deux groupes polaires qui se produit lorsqu'un atome d'hydrogène (H) lié par covalence à un atome fortement électronégatif tel que l'azote (N) ou l'oxygène (O) subit le champ électrostatique d'un autre atome fortement électronégatif situé à proximité.

Le nombre de paires d'ions et/ou de groupements électronégatifs pouvant être engagés dans au moins une liaison ionique et/ou hydrogène en surface des particules inorganiques est ajusté pour obtenir des propriétés optimales selon la nature chimique des fonctions ioniques. La quantité de paires d'ions en surface est comprise entre 0,5 et 20%mol par rapport à la quantité des précurseurs de particules inorganiques, et de préférence entre 1 et 10%mol.

Les particules utilisées avant fonctionnalisation, nommées particules inorganiques, présentent de préférence un coefficient de sphéricité supérieur ou égal à 0,75, de préférence supérieur ou égal à 0,9. Les particules inorganiques sont très préférentiellement sphériques.

Dans le cadre de cette invention, **il** est entendu que le coefficient de sphéricité d'une particule représente le rapport du plus petit diamètre de la particule au plus grand diamètre de celle-ci. Pour une sphère parfaite, ce rapport est égal à 1.

Lesdites particules inorganiques sont de préférence individualisées.

Par "individualisé", on entend un ensemble de particules dans lequel les particules ne sont pas agrégées, c'est-à-dire que chaque particule de l'ensemble n'est pas liée à d'autres particules par des liaisons chimiques fortes, telles que des liaisons covalentes.

De manière préférée, les particules inorganiques sont individualisées et/ou sphériques.

Les particules inorganiques sont préférentiellement constituées d'un réseau tridimensionnel de silice (SiO₂), dont le diamètre est compris entre 0,1 et 100 µm.

Les particules inorganiques ont de préférence un diamètre compris entre 0,3 et 40 µm, et encore plus préférentiellement entre 1 et 10 µm.

Les précurseurs des particules inorganiques sont des précurseurs métallo-organiques, de préférence des précurseurs de silice. Les précurseurs des particules inorganiques de silice sont, par exemple, des chlorures de silicium, tel que le tétrachlorure de silicium, ou des alcoxydes de silicium tels que le tétraéthoxysilane, le tétraméthoxysilane, ou le tétra-n-propoxysilane.

Lesdites particules inorganiques sont synthétisées par polymérisation inorganique des précurseurs, notamment de silice, suivant les réactions d'hydrolyse et de condensation, effectuées par voie aérosol.

De manière surprenante, ce procédé aérosol permet la synthèse et la fonctionnalisation des particules hybrides de manière concomitante.

Les polymères thermoplastiques et/ou élastomères compatibles avec lesdites particules hybrides peuvent être choisis dans le groupe constitué par les polyoléfines, de préférence choisi parmi le polyéthylène, le polypropylène, le caoutchouc, les copolymères de éthylène/acétate de vinyle EVA, les élastomères thermoplastiques de type POE tels que le poly(éthylène-octène) PEC8 ou le poly(éthène-butène) PEC4, les élastomères EPDM, les élastomères thermoplastiques styréniques à blocs tels que les SBS (polystyrène-b-polybutadiène-b-polystyrène), les SIS (polystyrène-b-polyisoprène-b-polystyrène) ou les SEBS (polystyrène-b-poly(éthylène-butylène)-b-polystyrène), les élastomères NBR (nitrile-butadiene rubber), les élastomères SBR (styrene-butadiene rubber) ou les élastomères SIR (styrene-isoprene rubber), ou leur mélange.

L'invention concerne également un procédé de fabrication de particules hybrides selon l'invention, par voie aérosol, comprenant les étapes suivantes de :
a) Nébulisation, dans un réacteur, d'une première solution hydroalcoolique ou aqueuse contenant un ou plusieurs précurseurs de particules inorganiques, de préférence de silice, de concentration massique comprise entre 0,1 et 20%, et d'une seconde solution alcoolique ou hydroalcoolique comprenant au moins une molécule portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule étant un organosilane, et au moins un contre-ion et/ou au moins un donneur/accepteur de liaisons hydrogène portant au moins une double liaison C=C, la quantité de paires d'ions et/ou de groupements électronégatifs susceptibles d'être engagés dans la au moins une liaison hydrogène étant calculée par rapport à la quantité molaire desdits précurseurs de particules inorganiques variant entre 0,5 et 20%mol, pour obtenir un brouillard de gouttelettes des première et seconde solutions ;
b) Chauffage dudit brouillard à une température comprise entre 50°C et 100°C selon une durée prédéterminée pour la formation de particules inorganiques et évaporation du solvant ;
c) Chauffage desdites particules obtenues lors de l'étape b) à une température dite condensation pour la transformation desdits précurseurs en la partie inorganique desdites particules hybrides.
d) Récupération desdites particules hybrides.

La durée prédéterminée de l'étape b) est de préférence inférieure ou égale à 10 s, et encore plus préférentiellement inférieure ou égale 5 s.

Par « température de condensation », on entend une température comprise entre 50 et 250 °C, de préférence entre 100 et 200 °C, et encore plus préférentiellement environ égale à 150 °C.

Le procédé de l'invention est un procédé en continu et qui demande un nombre d'étape de préparation limitées. Il permet d'obtenir de façon simple des particules hybrides, non agrégées, et fonctionnalisées, en une seule étape, sans production de déchets, les sous-produits pouvant être recyclés et/ou réutilisés. Ce procédé permet de facilement faire varier l'état de surface des particules hybrides en changeant la nature chimique des molécules présentes et leur quantité. Ainsi, contrairement aux agents réticulants moléculaires, les particules hybrides de la présente invention peuvent être adaptées pour faire varier la dynamique d'échange des liaisons tout en apportant également plusieurs autres propriétés dues à la nature des composés utilisés (anti-UV, magnétisme, coloration, etc.).

Les particules inorganiques sont synthétisées et fonctionnalisées en une seule étape et par voie aérosol pour former des particules hybrides selon l'invention. Ce procédé de synthèse implique une première étape d'atomisation de solutions en gouttelettes qui sont chauffées pour être transformées en particules solides individuelles.

Selon un mode de réalisation, la première solution est une solution aqueuse ou hydroalcoolique, de pH compris entre 2 et 4. De préférence, la première solution est une solution aqueuse.

La seconde solution est avantageusement une solution aqueuse, alcoolique pure ou hydroalcoolique, cette seconde solution pouvant être le méthanol, l'éthanol ou le propanol lorsqu'elle contient un alcool, sans être limité à ces exemples d'alcool.

Selon un mode de réalisation, dans le cas d'utilisation de silice, les précurseurs de silice sont des chlorures de silicium, tels que le tétrachlorure de silicium, ou des alcoxydes de silicium, tels que le tétraéthoxysilane, le tétraméthoxysilane, ou le tétra-n-propoxysilane.

Selon un mode de réalisation, les précurseurs de particules inorganiques (non fonctionnalisées) sont celles citées précédemment.

La quantité de paires d'ions et/ou de groupements électronégatifs pouvant être engagés dans la au moins une liaison hydrogène de l'étape a) est de préférence comprise entre 0,5 et 10%mol, et encore plus préférentiellement entre 0,8% et 3%mol par rapport à la quantité de précurseurs de particules inorganiques.

Les autres composés ou groupes, tels que les paires d'ions, le contre-ion, les molécules, les organosilanes, etc ; impliqués dans le procédé sont tels que définis plus haut.

Selon un mode de réalisation alternatif à l'étape a), les première et seconde solutions forment une solution unique de précurseurs inorganiques et de paires d'ions et/ou de groupements électronégatifs susceptibles d'être engagés dans au moins une liaison hydrogène. Ladite solution unique contient dans ce cas-là une quantité juste nécessaire d'alcool pour permettre la dissolution des paires d'ions et/ou des groupements électronégatifs susceptibles d'être engagés dans au moins une liaison hydrogène.

Selon un mode de réalisation, dans le cas des deux solutions distinctes (première et seconde solutions), elles sont nébulisées en même temps et elles se rencontrent à la sortie d'une buse de nébulisation d'un dispositif d'atomisation. Dans ce cas-là, la solution contenant le précurseur inorganique est nébulisée au centre de la solution contenant la molécule portant au moins la paire d'ions et/ou au moins le groupement électronégatif susceptible d'être engagé dans au moins une liaison hydrogène.

Le procédé peut être mis avantageusement en oeuvre par un dispositif d'atomisation, par voie aérosol, disponible dans le commerce, tel qu'un réacteur ou atomiseur Büchi-B290. Un tel atomiseur comprend les éléments principaux suivants : un dispositif d'aspiration de solution(s) via une pompe péristaltique, une entrée de gaz comprimé, un module de chauffage, une buse d'atomisation, un cylindre de séchage et un récipient de récupération.

La buse d'atomisation peut-être de différents agencements classiques, de type double, triple ou plus de buses, pour la synthèse de particules hybrides formées de particules inorganiques présentant un coefficient de sphéricité supérieur ou égal à 0,75 et/ou un diamètre moyen compris entre 0,1 et 100 µm.

Selon un mode de réalisation, le procédé peut avantageusement comprendre une étape d'agitation pendant une durée allant de 10 min à 48 h, avant la nébulisation de l'étape a) afin d'hydrolyser les précurseurs de particules inorganiques à réseau tridimensionnel.

De préférence, le temps de l'étape d'agitation est compris entre 10h et 24h pour une solution à pH 2, ou entre 30 min et 2h pour une solution à pH 3.

Le procédé peut comprendre, avant l'étape a) de nébulisation et après l'étape d'agitation, une étape classique d'aspiration de la ou des solutions définies ci-dessus vers une buse d'atomisation d'un atomiseur par l'intermédiaire d'un gaz comprimé chauffé par un module de chauffage.

Ladite étape d'aspiration est réalisée typiquement par une pompe péristaltique, un pousse-seringue ou tout autre élément remplissant cette fonction.

Selon un mode de réalisation A, les particules inorganiques sont fonctionnalisées, par co-condensation des organosilanes et des précurseurs de silice par voie aérosol, avec un organosilane portant une fonction ammonium quaternaire. L'ammonium quaternaire peut être lié à une chaîne carbonée, cette chaîne carbonée pouvant être une chaîne de 1 à 18 carbones, de préférence de 10 à 18 carbones. Le contre-ion est dans ce cas un sulfonate, un carboxylate, un acétate, un bromate ou un chlorate porté par une molécule qui a aussi une double liaison C=C, comme le 3-sulfopropylméthacrylate de potassium ou le 4-vinylbenzenesulfonate de sodium dans le cas d'un sulfonate. Cette double liaison peut provenir d'un alcène tel que les groupes styrène, (méth)acrylate ou encore vinylique. De façon alternative, l'organosilane peut porter une fonction sulfonate et le contre-ion peut être un ammonium quaternaire lié à une double liaison C=C. Préférentiellement, l'organosilane est le chlorure d'ammonium de dimethyloctadécyle (3-triméthoxysilyl) propyle portant un ammonium quaternaire et une longue chaîne carbonée, et le contre-ion est le 3-sulfopropylméthacrylate de potassium, portant un anion sulfonate et une fonction méthacrylate :

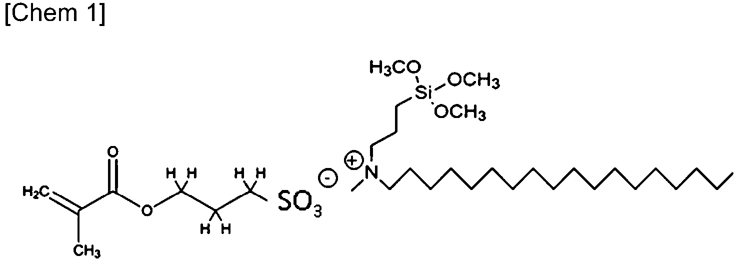

De la même façon, la paire d'ions peut être réalisée entre le N,N,N-triméthyl-3-[(2-méthyl-1-oxo-2-propén-1-yl)oxy]-1-propanaminium et l'acide 3-(trihydroxysilyl)-1-propanesulfonique :

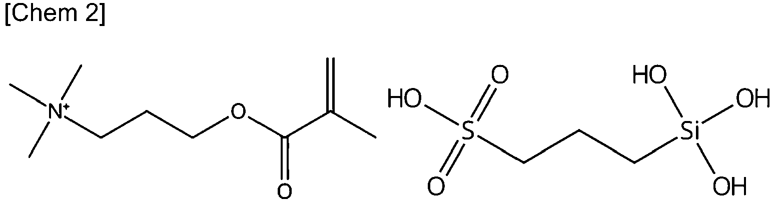

Selon un autre mode de réalisation B, les particules inorganiques peuvent être fonctionnalisées par un organosilane portant une fonction amine primaire sous forme acide (NH₃⁺) et dont le contre-ion porte une fonction carboxylate ainsi qu'une double liaison C=C, par exemple un acide maléique sous sa forme maléate. De même, les groupements ioniques peuvent être inversés. Il est possible d'avoir un organosilane portant une fonction carboxylate et son contre-ion étant une amine portant aussi une double liaison C=C. Préférentiellement, l'organosilane est le 3-aminopropyltriéthoxysilane et le contre-ion est l'acide maléique :

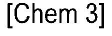

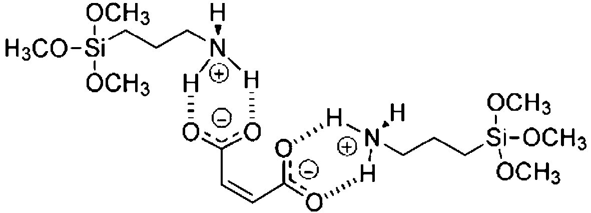

Selon un mode de réalisation C, la surface des particules inorganiques peut comprendre une ou plusieurs liaisons hydrogène. Dans ces cas-là, l'organosilane, lié de manière covalente à la particule, porte une fonction pyridine. L'azote de la fonction pyridine est alors engagée dans une liaison hydrogène avec l'hydrogène d'une fonction carboxylique. La fonction carboxylique est portée par une molécule qui présente aussi une double liaison C=C. L'organosilane peut porter la fonction carboxylique et la molécule portant la double liaison C=C comportant aussi une pyridine. Préférentiellement, l'organosilane est le 2-(2-pyridylethyl)triméthoxysilane et la molécule portant à la fois l'acide carboxylique et la double liaison C=C est l'acide maléique :

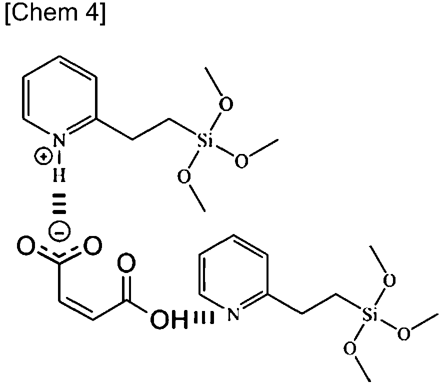

La présente invention concerne également un véhicule automobile comprenant au moins un élément, ledit élément comprenant un matériau incorporant des particules hybrides selon l'invention.

Avantageusement, le matériau comprenant les particules selon la présente invention, est utilisé pour fabriquer un ou plusieurs éléments d'un véhicule, par exemple un véhicule automobile, un train, un bateau ou tout autre véhicule.

Le véhicule est typiquement un véhicule automobile, tel qu'une voiture, un camion, un autobus, etc.

Selon un autre aspect de l'invention, les particules hybrides sont utilisées en tant qu'agent réticulant dans des matériaux plastiques, sans limitation, notamment des pièces plastiques d'intérieur ou d'extérieur d'un véhicule, par exemple, le tableau de bord, les portières et des garnitures de décorations, etc.

De façon avantageuse, l'invention permet de répondre plus facilement aux directives européennes nécessitant une revalorisation de 95% des composants des véhicules automobiles hors d'usage (directive 2000/53/CE).

L'invention est décrite plus en détail dans les exemples qui suivent en références aux figures.

### Brève description des dessins

[Fig. 1] est une représentation schématique de particules hybrides selon une mode de réalisation de l'invention ;
[Fig. 2] représente un exemple d'un dispositif d'atomisation (atomiseur) selon un mode de réalisation de l'invention.

### Description détaillée

### Exemple 1

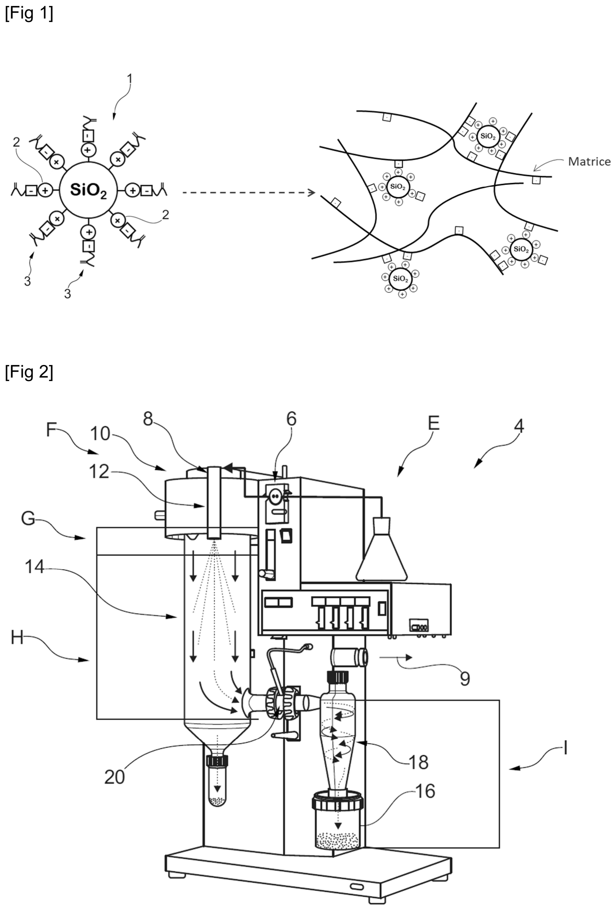

### La figure 1 représente un exemple de particules hybrides

Ces particules de silice (SiO₂), hybrides 1 (illustrés à la partie gauche de la figure 1), présentent en surface deux molécules. La première molécule (numérotée 2 à la figure 1) porte une fonction chargée positivement. La seconde molécule (numérotée 3) porte une fonction chargée négativement, ce qui forme une liaison ionique ou électrostatique plus ou moins forte. Cette deuxième molécule 3 porte aussi une double liaison C=C qui permet le greffage radicalaire (illustré par la flèche en pointillés) des particules aux polymères thermoplastiques et élastomères. De façon alternative, la première molécule 2 peut porter une fonction chargée négativement et la seconde molécule 3 une fonction chargée positivement, la seconde molécule 3 possédant aussi une double liaison C=C.

### Exemple 2

Un exemple de dispositif d'atomisation 4 est donné à la figure 2.

Il comprend les éléments principaux qui suivent : un dispositif d'aspiration de solution(s) via une pompe péristaltique 6, une entrée de gaz comprimé 8 (température d'entrée), une évacuation de gaz 9, un module de chauffage 10, une buse d'atomisation 12, un cylindre de séchage 14, un récipient de récupération 16, un dispositif de cyclone 18, et une sonde de température 20 (température de sortie).

Un procédé de fabrication de particules hybrides comporte des étapes d'aspiration E de la ou des solutions de précurseurs et de paires d'ions par la pompe péristaltique 6 vers la buse d'atomisation 12 par l'intermédiaire d'un gaz comprimé chauffé par le module de chauffage 10 (zones E et F de la figure 2). Une étape d'atomisation de la ou des solutions de précurseurs et de paires d'ions en gouttelettes est montrée en zone G, suivie d'une étape de séchage des gouttelettes dans le cylindre de séchage 14, comme montrée en zone H. Après cette étape de séchage/chauffage, a lieu une étape de récupération des particules hybrides 1 (zone I), le flux en sortie de la zone H étant dirigé vers le dispositif de cyclone 18, les gaz étant évacués par l'évacuation de gaz 9 en amont dudit dispositif de cyclone 18, et les particules hybrides 1 sont recueillies.

Les étapes a), b) et c) du procédé de l'invention correspondent aux zones G et H du dispositif (nébulisation-chauffage). L'étape d) correspond à la zone I (récupération de particules).

### Exemple 3

Dans le cas du mode de réalisation A, le procédé est mis en œuvre comme suit.

La synthèse des particules hybrides est effectuée par voie aérosol. Pour cela, la paire d'ions est préparée en mélangeant en quantité stœchiométrique d'anion et de cation dans du méthanol. Une seconde solution aqueuse acidifiée à pH=2 est préparée contenant du tétraéthoxysilane (TEOS) permettant d'atteindre une concentration de 1% massique en silice. Cette solution est laissée sous agitation pendant 8 heures afin d'hydrolyser le TEOS. La paire d'ions est ensuite ajoutée dans cette solution de TEOS. Entre 0,5%mol et 20%mol de paires d'ions sont ajoutés par rapport à la quantité de TEOS. Ce mélange est nébulisé dans un réacteur atomiseur Büchi-B290. Ce réacteur est chauffé à 150°C en entrée ce qui correspond à une température de sortie de 90°C environ. Le débit de la solution nébulisée est de 1,5 mL/min, le flux d'air permettant la nébulisation correspond à un débit de 740 L/h. Enfin, le flux d'air permettant de récupérer les particules est fixé à 27 m³/h.

Dans le cas du mode de réalisation B, le procédé est mis en œuvre comme suit.

Les particules hybrides sont synthétisées par aérosol mais selon deux protocoles différents : soit par nébulisation d'une solution à pH=3 contenant le TEOS et la paire d'ions, soit par la nébulisation de deux solutions, l'une contenant le TEOS et l'autre la paire d'ions. Dans les deux cas, la paire d'ions est préparée en mélangeant en quantité stœchiométrique d'anion et de cation dans du méthanol.

Puis, dans le premier cas, une solution aqueuse acidifiée à pH=3 est préparée, contenant du tétraéthoxysilane TEOS permettant d'atteindre une concentration de 1%massique en silice. Cette solution est laissée sous agitation pendant 45min afin d'hydrolyser le TEOS. La paire d'ions est ensuite ajoutée dans cette solution de TEOS. Entre 1 et 10%mol de paires d'ions sont ajoutés par rapport à la quantité de TEOS. Ce mélange est nébulisé dans un réacteur atomiseur Büchi-B290. Ce réacteur est chauffé à 150°C en entrée ce qui correspond à une température de sortie de 90°C environ pour un taux molaire de paires d'ions inférieure à 5%mol sinon le réacteur est chauffé à 50°C soit une température en sortie d'environ 35°C. Le débit de la solution nébulisée est de 1,5 mL/min, le flux d'air permettant la nébulisation correspond à un débit de 740 L/h. Enfin le flux d'air permettant de récupérer les particules est fixé à 27 m³/h.

Dans le second cas, une solution aqueuse A, acidifiée à pH=2, est préparée contenant du tétraéthoxysilane TEOS permettant d'atteindre une concentration de 1%massique en silice. Cette solution est laissée sous agitation pendant 8h afin d'hydrolyser le TEOS. La paire d'ions est ajoutée dans une solution B composée à 75%vol d'éthanol absolue et 25%vol d'eau distillée. La quantité de paire-d'ions est calculée afin de correspondre à un taux molaire entre 1% et 6% par rapport à la quantité de TEOS de la solution A. Ces deux solutions sont nébulisées dans un réacteur atomiseur Büchi-B290, à l'aide d'une buse constituée de 3 canaux concentriques imbriqués. La solution A est nébulisée dans le canal central à un débit de 1,5 mL/min. La solution B est nébulisée dans le canal entourant le canal central, avec un débit de 0,75 mL/min. Enfin le canal extérieur permet la circulation de l'air à un débit de 740 L/h. Le réacteur est chauffé à 150°C. Le flux d'air permettant de récupérer les particules est fixé à 27 m³/h.

Dans le cas du mode de réalisation C, le procédé est mis en œuvre comme suit.

Les particules hybrides sont synthétisées par aérosol, en nébulisant deux solutions, l'une contenant le TEOS et l'autre les molécules interagissant par liaison hydrogène. Les paramètres de ce procédé sont équivalents au deuxième cas décrit précédemment pour le mode de réalisation B.

### Exemples 3.1-3.34

Les Tableaux 1 et 2 montrent la fabrication de particules hybrides en utilisant le dispositif de l'Exemple 2 en faisant varier les conditions opératoires spécifiques.

Les Exemples 3.1-3.25 (visibles au Tableau 1) concernent le procédé mis en œuvre avec une double buse, et les Exemples 3.26-3.34 (visibles au Tableau 2) avec une triple buse.

### Tableau 1 dans lequel :

### A) Paramètres pour une utilisation d'une double buse

### Paramètres du procédé

W : Température d'entrée de l'atomiseur (°C)
X : Débit de la solution (mL/min)
Y : Flux d'air permettant la nébulisation (L/h)
Z : Flux d'air permettant la récupération des particules hybrides (m³/h)

### Paramètres de la solution

A : Concentration massique en TEOS (%poids ou %wt *en anglais*)
B : Quantité molaire en PI (paire d'ions et/ou groupements électronégatifs susceptibles d'être engagés dans au moins une liaison hydrogène) par rapport à la quantité de TEOS (% molSi)
C : pH
D : Temps d'hydrolyse du TEOS après ajout de la PI (paires d'ions et/ou groupements électronégatifs susceptibles d'être engagés dans au moins une liaison hydrogène)
T : Temps d'hydrolyse après l'ajout de la PI (paire d'ions et/ou groupements électronégatifs susceptibles d'être engagés dans au moins une liaison hydrogène)

### Tableau 2 dans lequel :

### B) Paramètres pour une utilisation d'une triple buse

### Paramètres du procédé

W : Température d'entrée de l'atomiseur (°C)
X1 : Débit de la solution 1 (mL/min)
X2 : Débit de la solution 2 (mL/min)
Y : Flux d'air permettant la nébulisation (L/h)
Z : Flux d'air permettant la récupération des particules hybrides (m³/h)

### Paramètres de la solution 1

A : Concentration massique en TEOS (%poids ou %wt *en anglais*)
C1 : pH
D : Temps d'hydrolyse du TEOS après ajout de la PI (paire d'ions et/ou groupements électronégatifs susceptibles d'être engagés dans au moins une liaison hydrogène )

### Paramètres de la solution 2

B : Quantité molaire en PI (paire d'ions et/ou les groupements électronégatifs susceptibles d'être engagés dans au moins une liaison hydrogène) par rapport à la quantité de TEOS (% molSi)
C2 : pH
R : Rapport volumique EtOH/H₂O (%v)

### Nature chimique des molécules organiques formant la paire d'ions et/ou les groupements électronégatifs susceptibles d'être engagés dans au moins une liaison hydrogène

α : organosilane
β : Contre-ion et/ou donneur/accepteur de liaison hydrogène portant au moins une double liaison C=C
α1 : NC18+ = Chlorure de diméthyloctadécyl[3-(trimethoxysilyl)propyl] ammonium
α2 : NC+ = chlorure d'ammonium de triméthyl(3-trimethoxylilyl)-propyle
α3 : APTES = 3-aminopropyltriethoxysilane
α4 : Si Pyridyne = 2-(2-pyridylethyl)trimethoxysilane
β1 : SO³⁻ = 3-sulfopropylméthacrylate de potassium
β2 : styrSO3⁻ = sodium 4-vinylbenzenesulfonate
β3 : Acide maléique

Lorsqu'une double buse est utilisée, les particules hybrides ont un diamètre allant d'environ 1 µm à environ 40 µm. Lorsqu'une triple buse est utilisée, les particules hybrides ont un diamètre allant d'environ 1 µm à environ 3 µm.

Dans les deux cas, les particules hybrides ont un coefficient de sphéricité supérieur 90%, soit supérieur à 0,9.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

**[Tableau 1]**

| | Paramètres de la synthèse des particules hybrides | | | | | | | | | | | Propriétés des particules hybrides | |
|---|---|---|---|---|---|---|---|---|---|---|---|---|---|
| | Nature chimique PI | | Paramètres procédé | | | | Paramètres solutions | | | | | Taille de particules /diamètre moyen | Coefficient de sphéricité |
| Exemples | α | β | W (°C) | X (mL/min) | Y (L/h) | Z (m3/h) | A (%wt) | B (%molSi) | C | D | T | (microns) | (%) |
| 3.1 | α1 | β1 | 150 | 1.5 | 740 | 27 | 1 | 2 | 2 | 8h | 1h | 2.23 | >90 |
| 3.2 | α1 | β1 | 150 | 3 | 740 | 27 | 1 | 2 | 2 | 8h | 1h | 5 | >90 |
| 3.3 | α1 | β1 | 150 | 4.5 | 740 | 27 | 1 | 2 | 2 | 8h | 1h | 19.9 | >90 |
| 3.4 | α1 | β1 | 150 | 6 | 740 | 27 | 1 | 2 | 2 | 8h | 1h | 39.3 | >90 |
| 3.5 | α1 | β1 | 150 | 12 | 740 | 27 | 1 | 2 | 2 | 8h | 1h | 31.9 | >90 |
| 3.6 | α1 | β1 | 150 | 1.5 | 740 | 27 | 0.8 | 2 | 2 | 8h | 1h | 1.5 | >90 |
| 3.7 | α1 | β1 | 150 | 1.5 | 740 | 27 | 1.2 | 2 | 2 | 8h | 1h | 3.4 | >90 |
| 3.8 | α1 | β1 | 150 | 1.5 | 740 | 27 | 3 | 2 | 2 | 8h | 1h | 3.2 | >90 |
| 3.9 | α1 | β1 | 150 | 1.5 | 740 | 27 | 1 | 1 | 2 | 8h | 1h | 2.8 | >90 |
| 3.10 | α1 | β1 | 150 | 1.5 | 740 | 27 | 1 | 5 | 2 | 8h | 1h | 3.06 | >90 |
| 3.11 | α1 | β1 | 150 | 1.5 | 740 | 27 | 1 | 20 | 2 | 8h | 1h | 16.2 | >90 |
| 3.12 | α1 | β1 | 150 | 1.5 | 740 | 27 | 1 | 2 | 3 | 8h | 1h | 2.6 | >90 |
| 3.13 | α1 | β1 | 150 | 1.5 | 740 | 27 | 1 | 2 | 2 | 12h | 1h | 1.3 | >90 |
| 3.14 | α1 | β1 | 150 | 1.5 | 740 | 27 | 1 | 2 | 2 | 24h | 1h | 2.3 | >90 |
| 3.15 | α1 | β1 | 150 | 1.5 | 740 | 27 | 1 | 2 | 2 | 8h | 30min | 2 | >90 |
| 3.16 | α1 | β1 | 150 | 1.5 | 740 | 27 | 1 | 2 | 2 | 8h | 2h | 3.4 | >90 |
| 3.17 | α1 | β1 | 150 | 1.5 | 740 | 27 | 1 | 2 | 2 | 8h | 4h | 1.5 | >90 |
| 3.18 | α2 | β1 | 150 | 1.5 | 740 | 27 | 1 | 2 | 2 | 8h | 1h | 3 | >90 |
| 3.19 | α1 | β2 | 150 | 1.5 | 740 | 27 | 1 | 2 | 2 | 8h | 1h | 3.3 | >90 |
| 3.20 | α3 | β3 | 150 | 1.5 | 740 | 27 | 1 | 2 | 3 | 1h | 30min | 1.7 | >90 |
| 3.21 | α3 | β3 | 150 | 1.5 | 740 | 27 | 1 | 1 | 3 | 1h | 30min | 2.5 | >90 |
| 3.22 | α3 | β3 | 50 | 1.5 | 740 | 27 | 1 | 6 | 3 | 1h | 30min | 4.3 | >90 |
| 3.23 | α3 | β3 | 150 | 1.5 | 740 | 27 | 1 | 2 | 3 | 2h | 30min | 1.6 | >90 |
| 3.24 | α3 | β3 | 150 | 1.5 | 740 | 27 | 1 | 2 | 3 | 1h | 10min | 1.9 | >90 |
| 3.25 | α3 | β3 | 150 | 1.5 | 740 | 27 | 1 | 2 | 3 | 1h | 1h30 | 3.1 | >90 |

**[Tableau 2]**

| | Paramètres de la synthèse des particules hybrides | | | | | | | | | | | | | Propriétés des particules hybrides | |
|---|---|---|---|---|---|---|---|---|---|---|---|---|---|---|---|
| | Nature chimique PI | | Paramètres procédé | | | | | Paramètres solution 1 | | | Paramètres solution 2 | | | Taille de particules /diamètre moyen | Coefficient de sphéricité |
| Exemples | α | β | W (°C) | X1 (mL/min) | X2 (mL/min) | Y (L/h) | Z (m3/h) | A (%wt) | C1 | D | B (%molSi) | C2 | R (%v EtOH /H2O) | (microns) | (%) |
| 3.26 | α4 | β3 | 150 | 1.5 | 0.75 | 740 | 27 | 1 | 2 | 12h | 2 | 6 | 75/25 | 2.5 | >90 |
| 3.27 | α4 | β3 | 150 | 1.5 | 1.5 | 740 | 27 | 1 | 2 | 12h | 2 | 6 | 75/25 | 2.9 | >90 |
| 3.28 | α4 | β3 | 150 | 1.5 | 0.75 | 740 | 27 | 1 | 2 | 12h | 1 | 6 | 75/25 | 3 | >90 |
| 3.29 | α4 | β3 | 150 | 1.5 | 0.75 | 740 | 27 | 1 | 2 | 12h | 6 | 6 | 75/25 | 2.4 | >90 |
| 3.3 | α4 | β3 | 150 | 1.5 | 0.75 | 740 | 27 | 1 | 2 | 12h | 2 | 7 | 75/25 | 1.5 | >90 |
| 3.31 | α4 | β3 | 150 | 1.5 | 0.75 | 740 | 27 | 1 | 2 | 12h | 2 | 8 | 75/25 | 1.3 | >90 |
| 3.32 | α4 | β3 | 150 | 1.5 | 0.75 | 740 | 27 | 1 | 2 | 12h | 2 | 6 | 50/50 | 1.3 | >90 |
| 3.33 | α4 | β3 | 150 | 1.5 | 0.75 | 740 | 27 | 1 | 2 | 12h | 2 | 6 | 0/100 | 2.3 | >90 |
| 3.34 | α3 | β3 | 150 | 1.5 | 0.75 | 740 | 27 | 1 | 2 | 12h | 2 | 8 | 75/25 | 1.6 | >90 |

## Revendications

1. Particules hybrides (1), formées de particules inorganiques fonctionnalisées par au moins une molécule (2) portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule (2) étant un organosilane, et au moins un contre-ion et/ou au moins un donneur/accepteur de liaisons hydrogène (3) portant au moins une double liaison C=C, la quantité de paires d'ions et/ou de groupements électronégatifs susceptibles d'être engagés dans la au moins une liaison hydrogène en surface des particules inorganiques étant comprise entre 0,5 et 20% mol par rapport à la quantité de précurseurs des particules inorganiques.

2. Particules hybrides (1) selon la revendication 1, dans lesquelles les particules inorganiques présentent un coefficient de sphéricité supérieur ou égal à 0,75, de préférence supérieur ou égal à 0,9 ou sont sphériques.

3. Particules hybrides (1) selon la revendication 1 ou 2, dans lesquelles les particules inorganiques sont constituées d'un réseau tridimensionnel de silice (SiO₂), dont le diamètre moyen est compris entre 0,1 et 100 µm, de préférence entre 0,3 et 40 µm, encore plus préférentiellement entre 1 et 10 µm.

4. Particules hybrides (1) selon l'une des revendications 1 à 3, dans lesquelles les particules inorganiques sont fonctionnalisées avec un groupement organosilane (2) portant une fonction ammonium quaternaire, le contre-ion (3) étant un sulfonate porté par une molécule ayant une double liaison C=C, ou avec un groupement organosilane (2) portant une fonction sulfonate, le contre-ion (3) étant un ammonium quaternaire lié à une double liaison C=C.

5. Particules hybrides (1) selon l'une des revendications 1 à 3, dans lesquelles les particules inorganiques sont fonctionnalisées avec un groupement organosilane (2) portant une fonction amine primaire sous forme acide (NH₃⁺), le contre-ion (3) étant un carboxylate porté par une molécule ayant une double liaison C=C, ou avec un groupement organosilane (2) portant une fonction carboxylate, le contre-ion (3) étant une amine portée par une molécule ayant une double liaison C=C.

6. Particules hybrides (1) selon l'une des revendications 1 à 3, dans lesquelles la surface des particules inorganiques comprend au moins une liaison hydrogène, le groupement organosilane (2) étant lié de manière covalente à ladite particule inorganique, le groupement organosilane (2) portant au moins un groupement électronégatif, de préférence une fonction pyridine dont l'azote est engagé dans une liaison hydrogène avec l'hydrogène d'une fonction carboxylique portée par une molécule (3) ayant une double liaison C=C, ou le groupement organosilane (2) portant la fonction carboxylique, la molécule (3) portant la double liaison C=C comportant l'au moins un groupement électronégatif, de préférence la fonction pyridine.

7. Procédé de fabrication des particules hybrides (1) selon l'une des revendications 1 à 6, par voie aérosol, comprenant les étapes suivantes de :
a) Nébulisation (G), dans un réacteur (4), d'une première solution hydroalcoolique ou aqueuse contenant un ou plusieurs précurseurs de particules inorganiques, de préférence de silice, de concentration massique comprise entre 0,1 et 20%, et d'une seconde solution alcoolique ou hydroalcoolique comprenant au moins une molécule (2) portant au moins une fonction ionique impliquée dans au moins une paire d'ions et/ou au moins une fonction électrostatique impliquée dans au moins un groupement électronégatif susceptible d'être engagé dans au moins une liaison hydrogène, ladite au moins une molécule (2) étant un organosilane, et au moins un contre-ion et/ou au moins un donneur/accepteur de liaisons hydrogène (3) portant au moins une double liaison C=C, la quantité de paires d'ions et/ou de groupements électronégatifs pouvant être engagés dans la au moins une liaison hydrogène étant calculée par rapport à la quantité molaire desdits précurseurs de particules inorganiques variant entre 0,5 et 20%mol, pour obtenir un brouillard de gouttelettes des première et seconde solutions ;
b) Chauffage (H) dudit brouillard à une température comprise entre 50°C et 100°C selon une durée prédéterminée pour la formation de particules inorganiques et l'évaporation du solvant ;
c) Chauffage (H) desdites particules obtenues lors de l'étape b) à une température de condensation pour la transformation desdits précurseurs en la partie inorganique desdites particules hybrides (1).
d) Récupération (I) desdites particules hybrides (1).

8. Procédé selon la revendication 7, comprenant une étape d'agitation pendant une durée allant de 10 min à 48h, avant la nébulisation (G) de l'étape a) afin d'hydrolyser les précurseurs de particules inorganiques à réseau tridimensionnel.

9. Procédé selon la revendication 7 ou 8, dans lequel les première et seconde solutions forment une solution unique de précurseurs inorganiques et de paires d'ions et/ou de liaisons hydrogène.

10. Procédé selon l'une des revendications 7 à 9, comprenant, avant l'étape a) de nébulisation (G) et après l'étape d'agitation, une étape d'aspiration (E) de la ou desdites solutions vers une buse d'atomisation (12) d'un atomiseur (4) par l'intermédiaire d'un gaz comprimé chauffé (8) par un module de chauffage (10).
